# EUROPEAN PATENT APPLICATION

(11) **EP 3 907 524 A1**
(43) Date of publication of application: **10.11.2021**
(21) Application number: 20173458.9
(22) Date of filing: 07.05.2020
(51) Int. Cl.: G01S 7/481, G01S 17/42, G01S 17/89

(54) **A LIDAR SENSOR FOR LIGHT DETECTION AND RANGING, LIDAR MODULE, LIDAR ENABLED DEVICE AND METHOD OF OPERATING A LIDAR SENSOR FOR LIGHT DETECTION AND RANGING**

(71) Applicant: ams Sensors Singapore Pte. Ltd., Singapore 569877 (SG)
(72) Inventor: Helsloot, Michiel, 5656 AG Eindhoven (NL)
(74) Representative: Epping - Hermann - Fischer

(57) **Abstract**

A LiDAR sensor for light detection and ranging comprises a light source (LS), a driver circuit (DC), a detector (DT) and a processing unit (PU). The light source (LS) comprises an array of light emitters (LE), wherein the light emitters (LE) are electrically interconnected as groups, and wherein the light emitters are operable to emit light away from the LiDAR sensor. At least two of the groups of light emitters (LE) form areas of the light source (LS) resembling different geometries from each other. The driver circuit (DC) is operable to address the groups of light emitters (LE) individually, such that the light emitters (LE) from a same group emit light with a same emission characteristic. The detector (DT) comprises an array of photodetectors (PD), wherein each photodetector (PD) is operable to detect light emitted by the light source (LS) and being reflected by an object outside the LiDAR sensor and to generate a detector signal as a function of the detected light. The processing unit (PU) is operable to provide an output indicative of distance to the object based on the detector signals associated with a respective group of light emitters (LE).

## Description

This invention relates to a LiDAR sensor for light detection and ranging, LiDAR module, LiDAR enabled device and method of operating a LiDAR sensor for light detection and ranging.

Light detection and ranging, LiDAR for short, is a sensing technology for remote object detection and ranging, using a light source and receiver. In common implementations emitted light pulses may hit objects, reflect, and return to the LiDAR system where the receiver detects the returning light pulse. The time between sending and receiving a light pulse is dependent on the distance between the LiDAR system and the object. Knowing the time of travel allows for calculating distance. One possible implementation of this concept is Direct Time of Flight, D-ToF for short. The system emits short pulses, e.g. of Near Infrared light. A portion of that energy is returned and converted into distance information, optionally intensity and direction, and ultimately, from multiple consecutive measurements, speed. LiDAR sensor find various application as imaging systems, e.g. in autonomous vehicles, robots or Advanced Driver Assistance Systems, ADAS for short. LiDAR sensors are available for short range (up to 15 to 20 m), medium range (10 to 80 m) and long range (above 75 m) .

A LiDAR system can observe the complete field of view at once, called Flash systems. Flash typically works well for short to mid-range (0 to 100 m), and by capturing the complete scene at once also objects with high relative speeds can be detected properly. Another implementation is to focus on a subset of the FOV, consequentially look at subsets at a time, until the complete FOV is covered, called scanning LiDAR. Scanning can focus the light on the subset instead of the full FOV, and therefore can do object detection at a longer range compared to Flash. As a scanner only takes one subset of the FOV, it needs some steering to move the light beam from subset to subset. Current systems typically use a mechanical beam steering; either by rotating the complete sensor head, so called spinning LiDAR, or using mechanical components inside the sensor, e.g. polygon mirrors or MEMS mirrors. However, using mechanical components have the risk that these parts fail.

The key performance parameters in a LiDAR system are field of view, angular resolution, range, and frame rate. The primary parameters influencing these are numerical aperture of emitter and receiver pixels, emitter power and receiver sensitivity, combined with signal processing, such as averaging, or histogramming, that helps reduce stochastic noise. Traditionally, the LiDAR performance is a delicate balance of FoV, emitted power, pixel size and amount of averaging. Often, especially for long range LiDAR, frame rate and FoV are sacrificed to achieve better range performance. At the same time LiDAR systems face the continuous challenge to present a feasible, compact, and cost-effective solution with sufficient range performance.

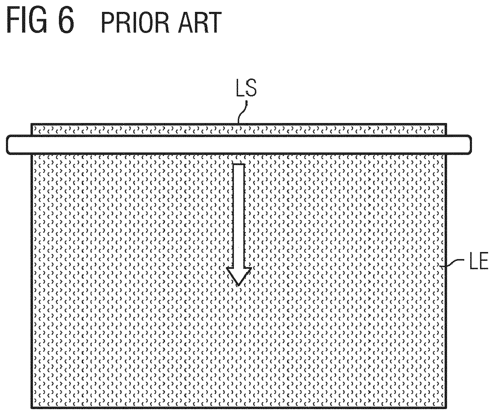

There have been first attempts in the art which aimed at beam steering without any moving parts, or true solid state. Current systems of both scanning LiDAR and flash LiDAR rely on equal illumination of the entire field of view. Figure 6 shows an example of a prior art vertical-cavity surface-emitting laser, or VCSEL, with a single row scanning illumination concept. While this is a generically applicable approach, there is no way to address specific regions of interest, ROI, in the field of view which renders these systems inflexible and power inefficient.

It is an object to provide a LiDAR sensor for light detection and ranging, a LiDAR module, a LiDAR enabled device and a method of operating a LiDAR sensor for light detection and ranging which overcome the shortcomings of common scanning LiDAR.

These objects are achieved by the subject-matter of the independent claims. Further developments and embodiments are described in the dependent claims.

It is to be understood that any feature described in relation to any one embodiment may be used alone, or in combination with other features described herein, and may also be used in combination with one or more features of any other of the embodiments, or any combination of any other of the embodiments unless described as an alternative. Furthermore, equivalents and modifications not described below may also be employed without departing from the scope of the LiDAR sensor for light detection and ranging, LiDAR module, LiDAR enabled device and method of operating a LiDAR sensor for light detection and ranging which are defined in the accompanying claims.

The following relates to an improved concept in the field of light detection and ranging, or LiDAR, systems. One aspect relates to segmentation of the LiDAR sensor. For example, the LiDAR sensor comprises a light source having an array of light emitters. Instead of grouping the light source into rows and/or columns, the improved concept suggests groups of light emitters which do not necessarily resemble a complete row or column. Instead the groups may resemble areas of the light source which can have any shape and form. Similarly, the LiDAR sensor comprises an array of photodetectors forming the detector. For example, grouping can be extended to the detector such that the groups can be associated with regions of interests in a LiDAR output, such as a LiDAR image, and/or by hardwiring photodetectors into groups as well. These groups, or regions of interest, may resemble areas of the detector which can have any shape and form as well. Thus, grouping can be introduced on both sides, emission and detection, in areas of the field of interest or field of view.

In at least one embodiment a LiDAR sensor for light detection and ranging comprises a light source, a driver circuit, a detector and a processing unit.

The light source comprises an array of light emitters which are electrically interconnected as groups. The light emitters are operable to emit light away from the LiDAR sensor. At least two of the groups of light emitters form areas of the light source resembling different geometries from each other. This is to say that in case one group resembles an area which coincides with a complete profile of a light source, e.g. a complete row or column of the light source, then there is at least one group which covers an area with different shape or geometry. This is true also for arrays of light emitters which are not arranged as rows and columns, e.g. a hexagonal arrangement. In fact, the groups may have any shape or geometry (free form) possible. Thus, the groups can be considered detached from the structure which is employed to arrange the light source. Instead their shape and area is largely determined by the electrical interconnections and addressing by the driver circuit.

The light emitters can be considered pixels or elements of the light source and comprise light emitting diodes or semiconductor laser diodes, for example. The light emitters may all, or at least those within a given group, be of a same type. However, the light source may have light emitters of different types as well. The light source, or light emitters, may have one or more characteristic emission wavelengths. For example, an emission wavelength of the light emitter lies in the near infrared, NIR. Other wavelengths may include visible or ultraviolet, infrared (IR) or far-infrared (FIR), for example.

The driver circuit is operable to address the groups of light emitters individually. The addressing is such that the light emitters from a same group emit light with a same emission characteristic. For example, the driver circuit comprises a laser driver and may have one or more channels. The addressing is established via the one of more channels, for example.

The detector comprises an array of photodetectors. Each photodetector is operable to detect light emitted by the light source and being reflected by an object outside the LiDAR sensor. Furthermore, the photodetectors are operable to generate a detector signal as a function of the detected light. For example, the photodetectors can be implemented as solid-state or semiconductor photodetectors, which are arranged or integrated such as to form the array. Examples include CCD or CMOS image sensors, an array of single-photon avalanche diodes, SPADs, or other type of avalanche diodes, APDs. These types of photodetectors may be sensitive to light, such as NIR, VIS, and UV, and facilitate using narrow pulse widths in emission by means of the light emitter.

Finally, the processing unit is operable to provide an output which is indicative of distance to the object based on the detector signals associated with a respective group of light emitters. For example, the processing unit comprises a processor or microprocessor, e.g. to control operation of the LiDAR sensor. A complete LiDAR processing may be performed by the processing unit. However, LiDAR processing may be performed "off-chip" and the processing unit may only execute a pre-processing in order to provide distance information as output.

During operation the light source emits light on a "per group" basis. This means that the light emitters of a given group emits light together with a same emission characteristic. At the same time other groups of light emitters may not emit light at all or emit light with a different emission characteristic, e.g. different intensity. Eventually the light emitted by a group of light emitters hits one or more external objects of a scene, gets reflected, and returns to the LiDAR sensor where one or more of the photodetectors receive the returned light and generate detector signals as a function of the detected light. The time between sending and receiving light is dependent on the distance between the LiDAR sensor and a given object of the scene. Knowing time allows to calculate distance, e.g. based on the concept of Time of Flight. Typically, the LiDAR sensor comprises means to measure start and stop times, e.g. time-to-digital converters. The Time of Flight can be derived by means of the processing unit based on the measured start and stop times, for example. Emission may be pulsed, e.g. the light source emits short pulses of light, such as Near Infrared light. A portion of that energy is returned and converted in distance and optionally intensity and ultimately speed.

The improved concept overcomes a number of limitations of common LiDAR sensors. For example, the grouping of light emitters by means of electrical interconnections allows for stepping away from the traditional row/column partitioning with equal illumination. Instead the electrical interconnections allow for a free form partitioning scheme. By way of individual addressing certain groups this offers the possibility of power optimized illumination. This may be based on a-priori knowledge of the targeted types of a scene in the field of view. For example, on the emitter side, the driver circuit and receiver side, available resources can be directed more to areas that require more range. The receiver chain may include more statistical processing to reduce noise and improve detectable range, e.g. under control of the processing unit.

The improved concept helps solving several issues and combinations of issues imminent in prior art solutions. For example, the driver circuit may reduce the number of driving channels, reduce power requirements for less critical areas and optimize power handling for critical areas. The grouping or segmentation of the light source allows for easier power routing, full field of view illumination with fewer channels and concentration of power on regions of interest with 1D-addressable array, such as an array of VCSELs. 2D-addressability is not necessary but may open up the possibility of adaptive form ROIs. At the detector or receiver side a matching of groups of emitters to regions of interest may help to reduce the number of digital processing channels (TDCs, ADCs) and make more effective use of the available resources. In turn, this may lift requirements on the performance of the processing unit, e.g. a required image processor chip size.

In at least one embodiment the groups of light emitters, by way of the electrical interconnections, form contiguous areas of the array of light emitters (LE). This is to say that neighboring light emitters form the groups. Light emitters with a different location with respect to the light source may be members of a different group. However, different groups may be addressed by the driver circuit at the same time, i.e. operate, and thereby emit light, in parallel according to the emission characteristic used. In at least one embodiment the contiguous areas formed by the groups do not overlap. In at least one embodiment the contiguous areas formed by the groups cover the whole light emitting area of the light source.

In addition, or alternatively, groups of photodetectors, by way of electrical interconnections, form contiguous areas of the detector. This is to say that neighboring photodetectors form contiguous areas, which may form regions of interest. Photodetectors with a different location with respect to the light source may be members of a different area. Detection may then be associated with light being incident of the areas, or regions of interest at the level of the detector, respectively. In at least one embodiment the contiguous areas formed by the groups do not overlap. This way the areas, or regions of interest may be hardwired at the detector side as well. In at least one embodiment the contiguous areas formed by the photodetectors cover the whole light sensitive area of the detector.

In at least one embodiment the area formed by at least one group of light emitters and/or photodetectors resemble a non-rectangular geometry. The shape and geometry of a given group is not restricted to a structure of the light source. For example, the shape and geometry of a given group may not necessarily resemble the shape and geometry of a row or column of the light source. Non-rectangular geometry may include any arbitrary shape other than a rectangle, for example: triangle, pentagon, hexagon, or any polygon. However, the non-rectangular geometry may not necessarily be regular. However, the non-rectangular geometry may still resemble a geometric figure with four corners, such as a rhombus, kite, parallelogram, isosceles trapezoid or an irregular geometric figure with four corner points. A rectangular geometry is considered any geometrical figure wherein each pair of adjacent sides is perpendicular.

In at least one embodiment the processing unit is operable to provide a LiDAR image as output. The groups of light emitters are arranged according to regions of interest of the LiDAR image. The grouping of light emitters affects the emission side of the LiDAR sensor. However, the receiving side includes light which is reflected back to the LiDAR sensor by way of reflection or scattering. This way the grouping of light emitters also affects the receiving side of the LiDAR sensor. In case of LiDAR imaging, i.e. when the output of the LiDAR sensor is an image, then a given group of light emitters may have a corresponding counterpart in the LiDAR image, denoted region of interest, or ROI, hereinafter.

As discussed above, the processing unit is operable to provide an output which is indicative of distance to the object based on the detector signals associated with a respective group of light emitters. In case of LiDAR imaging, sections of the LiDAR image may be defined by the groups of light emitters, i.e. a location as well as shape of a given group may be visible in the LiDAR image due to reflection of emitted light. Thus, regions of interest can be defined by the sectioning or grouping of the light source. In turn, regions of interest can be defined in the LiDAR image, e.g. based on a-priori knowledge of a scene or predictions or assumptions what the LiDAR image will look like. However, regions of interest can also be defined by electrical interconnections of photodetectors. A definition can be set by the manufacturer, e.g. by choosing a layout of electrical interconnections of light emitters which resemble, as groups of light emitters, the regions of interest defined for the LiDAR image. This allows for creating increased adaptivity and optimizing of the LiDAR sensor, e.g. for particular or predictable areas in the field of view, FoV. As the form of groups and/or regions of interest can be freely chosen to a large extent there is considerable greater freedom of design as compared to common LiDAR systems.

In at least one embodiment the addressing of light emitters as groups is established by means of a hardwired connection. In addition, or alternatively, the addressing is established by means of a programmable switch and/or a dedicated power/control routing between a given group of light emitters and the driver circuit.

The electrical interconnections which determine the grouping of light emitters is fixed in the sense that they are set at the production level. However, the addressing by means of the driver circuit can be changed during operation of the LiDAR sensor. There may be one or more groups which are always addressed, e.g. always turned on or always turned off. This could be implemented by means of a hardwired connection between the driver circuit and the light emitters of a given group. One or more other groups may only be addressed at certain times, e.g. turned on or turned off at specific points in time or for a certain period of time. This may be implemented by means of the programmable switch and/or the dedicated power/control routing.

In at least one embodiment the driver circuit is operable to address the groups of light emitters according to a scanning process. During the scanning process one or more groups of light emitters emit light constantly during the scanning process. However, the same or other one or more groups of light emitters emit light for a pre-determined period of time. In addition, or alternatively, one or more groups of light emitters emit light sequentially in a chronological order.

According to the scanning process the driver circuit may only address one subset of groups of light emitters. Consequently, only a subset, corresponding to only certain regions of interest, of the FOV are illuminated. Basically, this implements a spinning LiDAR without the need of mechanically steering a light beam from one subset of the FOV to another. This effectively removes the risk that mechanical parts fail as no moving parts are needed, thus, allowing to create a true solid state solution.

Furthermore, the scanning process can be programmable to a large extent, e.g. via the processing unit, such that available resources can be directed more to areas that require more range. The scanning allows for directing more of the available optical energy into an area that otherwise requires the entire emitter and sensor to become more powerful. As such, it provides are more power efficient solution than the traditional homogeneous illumination approaches. For example, certain regions of interest can be illuminated more often than other or with a different emission characteristic or measured observed more times than other areas. This allows the processing unit to apply more statistical processing to reduce noise and improve detectable range, for example.

In at least one embodiment the processing unit is operable to define the scanning process by setting the chronological order as to when and with which emission characteristic a given group of light emitters is to be addressed by means of the driver circuit.

The chronological order effectively mimics a scanning of common LiDAR systems but without the need of mechanical components such as a MEMS mirror or steering device. Scanning is a time depend process with a high degree of flexibility. Different scanning patterns can be set by changing the chronological order. For example, a "circular" scanning pattern can be implemented by addressing groups of light emitters in a clockwise or counterclockwise fashion. A "forward facing" scanning pattern may favor regions of interests along a line in the LiDAR image, e.g. a horizontal line, and may be used for long range LiDAR. The processing unit can be arranged to receive customized scanning patterns of a user or be programmable to set the chronological order for a current scanning process. For example, scanning patterns could be optimizations for corner (medium range) / side facing (short range) LiDAR, specific configurable scenes in industrial and surveillance scenes, autonomous robots, or the like.

In at least one embodiment the emission characteristic of a light emitter involves light intensity and/or light wavelength. The emission characteristic is defined by one of the following. A given light emitter or group of light emitters, according to the emission characteristic used, emits light of a particular intensity and/or a particular wavelength. In addition, or alternatively, a given light emitter or group of light emitters, according to the emission characteristic used, emits no light.

The scanning process and chronological order define when and with which emission characteristic a given group of light emitters is emitting when addressed by means of the driver circuit. This time-dependent scanning process resembles the scanning pattern. Light intensity and/or light wavelength provide an additional degree of freedom in order to tailor the scanning pattern to a given application. For example, during a scanning process a certain group is addressed at a first instance in time to emit light according to a first emission characteristic, e.g. with a first intensity and/or wavelength. At second instance in time the same group can be addressed to emit light according to the first emission characteristic again or according to a second emission characteristic, e.g. with a second intensity and/or wavelength. This concept can be applied to all groups of light emitters.

In at least one embodiment the driver circuit comprises a plurality of driver channels. Each driver channel is associated to a section of the light source. Furthermore, the driver channels are synchronized with respect to addressing the groups of light emitters. The driver circuit is operable to address the groups of light emitters via the driver channels.

For example, the driver circuit can be implemented as a single unit and located in a vicinity of the light source. Then the driver channels establish electrical connections from the single circuit to the corresponding sections of the light source, e.g. to one or more groups of light emitters associated to said section. According to another implementation the driver circuit comprises a number of smaller driver units which together form the driver circuit. These driver units are arranged around the light source and in vicinity of the sections they are supposed to address. The smaller units are connected to the sections via dedicated driver channels, respectively.

Thus, the driver circuit can be flexibly implemented according to the application at hand. It allows placement of driver units all around the light source which may not be trivial with the tradition approaches. This makes the power routing and current density distribution a lot simpler. For example, VCSEL lasers as light source often only allow placement of drivers on two of the four sides of the VCSEL. This may be circumvented by direct bonding of the drivers onto the VCSEL but this results in too much heat from the drivers being transported to the VCSEL. The proposed portioning and use of driver units allows for a simpler solution.

In at least one embodiment the processing unit is operable to assign the regions of interest in the LiDAR image to the groups of light emitters. Furthermore, the scanning process further defines a relative illumination of the regions of interest during the scanning process.

For example, the regions of interest grouped around the center of the field of view can be illuminated more than the edges of the FOV. In another example, regions of interest where farther away objects are localized may need different, e.g. more illumination, than regions of interest with closer objects. In fact, the LiDAR sensor may be operable in a learning mode. During the learning mode a distribution and/or activity of distances is recorded and referenced to the regions of interest, e.g. by means of the processing unit. This way the scanning process can be adjusted during operation in order to account for the actual scene to be measured. The learning mode can be repeated during operation of LiDAR sensor.

In at least one embodiment at least the detector, the at least one driver circuit and the processing unit are integrated in a common integrated circuit. For example, the light source and the common integrated circuit are arranged on and electrically contacted to each other via a shared carrier or substrate. However, in other implementations the light source may also be integrated into the common integrated circuit. Integration allows for compact design, reducing board space requirements, enabling low-profile system designs in restricted space designs. Additionally, the complexity of the beam paths for emission and detection can be reduced.

In at least one embodiment the light source comprises a vertical cavity surface-emitting laser, VCSEL for short, comprising the array of light emitters. The detector comprises an array of single-photon avalanche diodes, SPADs.

One type of a semiconductor laser diode includes surface emitting lasers, such as the vertical-cavity surface-emitting laser, or VCSEL, or edge emitter lasers. VCSELs combine properties such as surface emission, with design flexibility in addressable arrays, low temperature dependence of the lasing wavelength, improved reliability and the possibility to use a wafer-level manufacturing process. For example, a VCSEL can be implemented as an array and typically comprises of 50-10k of individual light emitters. This limits the impact of a single emitter failure. The large number of light emitters allows to fine tune shape and geometry of the groups and/or regions of interest.

Furthermore, VCSELs offer a narrow wavelength bandwidth (especially over temperature) which allows for more effective filtering at the receiver side, e.g. the detector array, resulting in improved signal to noise ratio. The VCSEL allows for emitting a vertical cylindrical beam which renders the integration into the imaging system more straightforward. The array of single-photon avalanche diodes, SPADs for short, offer highly sensitive detection and, in combination with fast compact time-to digital converters, highly accurate distance measurements.

In at least one embodiment a LiDAR module comprises at least one LiDAR sensor according to the concept discussed above. A package encloses the LiDAR sensor with a light barrier optically shielding the light source from the detector. The light emitters are operable to emit light away from the LiDAR module. The photodetectors are operable to detect emitted light reflected by an object outside the LiDAR module.

Implementation as a LiDAR module allows for embedding the components of the LiDAR sensor in a same sensor package. This allows for an imaging system which can observe a complete field of view by scanning according to the scanning process. Such imaging system may emit pulses of light, such as in the infrared. A portion of that energy is returned and converted in distance and optionally speed, for example.

In at least one embodiment a LiDAR enabled device comprises at least one LiDAR module according to the proposed concept embedded in a host system. The host system comprises one of an assistance system for distance control, such as drive control, flight control, traffic control, an advanced driver assistance system, ADAS, a surveillance system, an industrial system, such as a logistics system, a mobile device, a navigation system and/or a camera.

In at least one embodiment a method of operating a LiDAR sensor for light detection and ranging comprises a LiDAR sensor. The LiDAR sensor comprises a light source further comprising an array of light emitters, wherein the light emitters are electrically interconnected as groups, and wherein the light emitters are operable to emit light away from the LiDAR sensor. At least two of the groups of light emitters (LE) form areas of the light source (LS) resembling different geometries from each other. Furthermore, the LiDAR sensor comprises a driver circuit, a detector comprising an array of photodetectors and a processing unit.

The method comprises the steps of addressing, using the driver circuit, the groups of light emitters individually, such that the light emitters from a same group emit light with a same emission characteristic. Using the photodetectors, light emitted by the light source and being reflected by an object outside the LiDAR sensor is detected and detector signals are generated as a function of the detected light. Finally, using the processing unit, an output is provided and is indicative of distance to the object based on the detector signals associated with a respective group of light emitters.

Further implementations of the method of operating a LiDAR sensor for light detection and ranging are readily derived from the various implementations and embodiments of the LiDAR sensor for light detection and ranging, LiDAR module and LiDAR enabled device and vice versa.

In the following, the concept presented above is described in further detail with respect to drawings, in which examples of embodiments are presented. In the embodiments and Figures presented hereinafter, similar or identical elements may each be provided with the same reference numerals. The elements illustrated in the drawings and their size relationships among one another, however, should not be regarded as true to scale, rather individual elements, such as layers, components, and regions, may be exaggerated to enable better illustration or a better understanding.
- Figure 1: shows an example LiDAR sensor,
- Figures 2A, 2B: show examples of a light source,
- Figures 3A to 3C: show examples of a scanning process,
- Figures 4A, 4B: show examples of a driver circuit,
- Figures 5A to 5C: show examples of regions of interest in a LiDAR image, and
- Figure 6: an example of a prior art VCSEL with a single row scanning illumination concept.

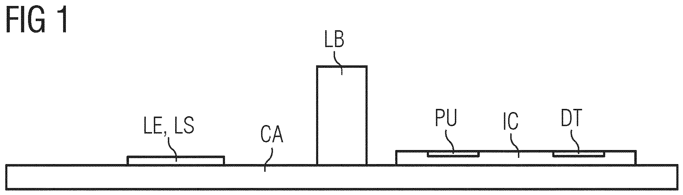

Figure 1 shows an example LiDAR sensor. The LiDAR sensor comprises a light source LS, a detector DT, a driver circuit DC and a processing unit PU, which are arranged contiguous with and electrically coupled to a carrier CA. For example, the carrier comprises a substrate to provide electrical connectivity and mechanical support. The detector DT, driver circuit DC and processing unit PU are integrated into a same chip CH which constitutes a common integrated circuit IC. Typically, the light source and the common integrated circuit are arranged on and electrically contacted to each other via the carrier. The components of the imaging system are embedded in a sensor package (not shown), thereby forming a LiDAR module. Further components such as a processing unit, e.g. a processor or microprocessor, to execute the detection method and ADCs, TDCs, etc. are also arranged in the sensor package and may be integrated into the same integrated circuit. In the package a light barrier LB optically shields the light source LS from the detector DT.

The light source LS comprises an array of light emitters LE. In this embodiment the light emitters are surface emitting lasers, e.g. a vertical-cavity surface-emitting laser, or VCSEL. The light emitters have one or more characteristic emission wavelengths. For example, an emission wavelength of the light emitter lies in the near infrared, NIR, e.g. larger than 800 nm and smaller than 10.000 nm. LIDAR applications may rely on the range of emission wavelength of the light emitter is in between 840 nm and 1610 nm which results in robust emission and detection. This range can be offered by the VCSEL. The detector array DA comprises one or more photodetectors, or pixels. The array of pixels form an image sensor. In this embodiment are SPADs but could also be photodiodes, e.g. a pinned photodiode, a pin photodiode or another type of photodiode. The processing unit PU comprises a processor or microprocessor, e.g. to control operation of the LiDAR sensor. A complete LiDAR processing may be performed by the processing unit. However, LiDAR processing may be performed "off-chip" and the processing unit may only execute a pre-processing in order to provide distance information as output.

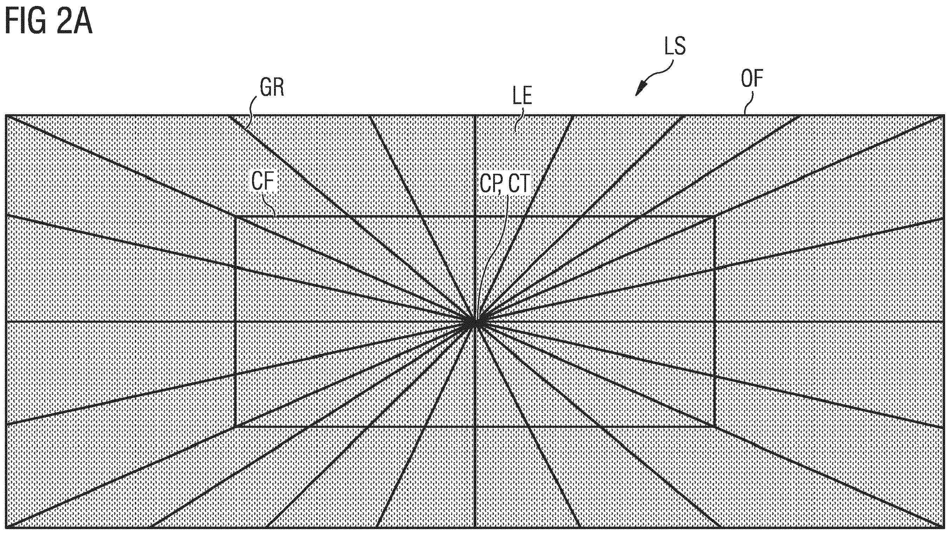

Figure 2A shows an example of a light source of a LiDAR sensor. The light source LS is a two-dimensional array of individual light emitters LE. A light emitting area of the light source LS is limited by an outer frame OF. The light emitters LE are indicated as dots in the drawing. In this embodiment the light emitters LE are implemented as vertical cavity surface-emitting lasers, VCSEL. For example, the array comprises 50-10k of individual light emitters.

The light emitters LE are electrically interconnected as groups GR of light emitters. The drawing shows groups GR for different shape or geometry. Inner groups are arranged inside a center frame CF. The inner groups are of triangular shape with one corner point CP of each triangular group fixed to a center CT of the center frame CF, or light source LS. Outside of the center frame CF further groups are arranged around the center CT. The outer groups have a non-triangular or tetragonal shape, i.e. four arbitrary corner angles totaling 360 degrees. Together the inner and outer groups cover the whole area of the outer frame OF, i.e. the whole light emitting surface of the light source LS. In this example the light source LS is sectioned into are 40 groups of light emitters.

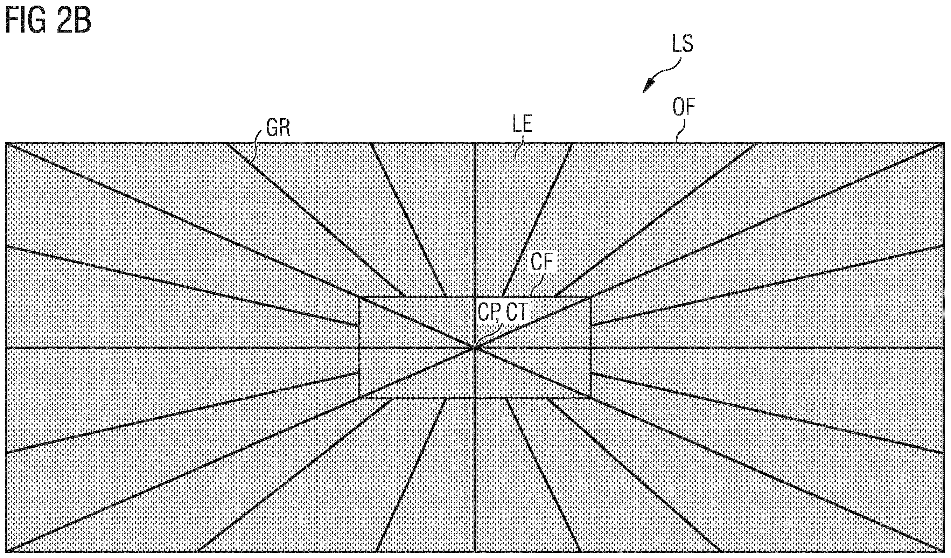

Figure 2B shows another example of a light source of a LiDAR sensor. The sectioning into groups is similar but there are fewer groups of light emitters, e.g. 28 groups. An optimal configuration may be determined in view of the intended application of a LiDAR sensor.

In general, the shape or geometry of a group is determined by means of the electrical interconnections between the individual light emitters LE. The light emitters LE are electrically interconnected such that they can be addressed as a group together, e.g. by way of a channel CH of a driver circuit DC (not shown). This way the groups of light emitters may have any form or shape and are only restricted by the implementation of the electrical interconnections to the driver circuit. It should be noted however, that the electrical interconnections of light emitters into groups is set by hardware, e.g. at the level of a production line. However, whether or not, or even when, a group of light emitter is activated during operation of the LiDAR sensor can be largely controlled in a scanning process. This will be discussed in more detail below.

The groups of light emitters can be addressed individually, i.e. on a "per group" basis. If addressed, the light emitters LE from a same group emit light with a same emission characteristic. At the same time other groups of light emitters may not emit light at all or emit light with a different emission characteristic. The emission characteristic includes intensity and/or wavelength, for example. The addressing of groups can be controlled by the driver circuit DC, e.g. via dedicated driver channels.

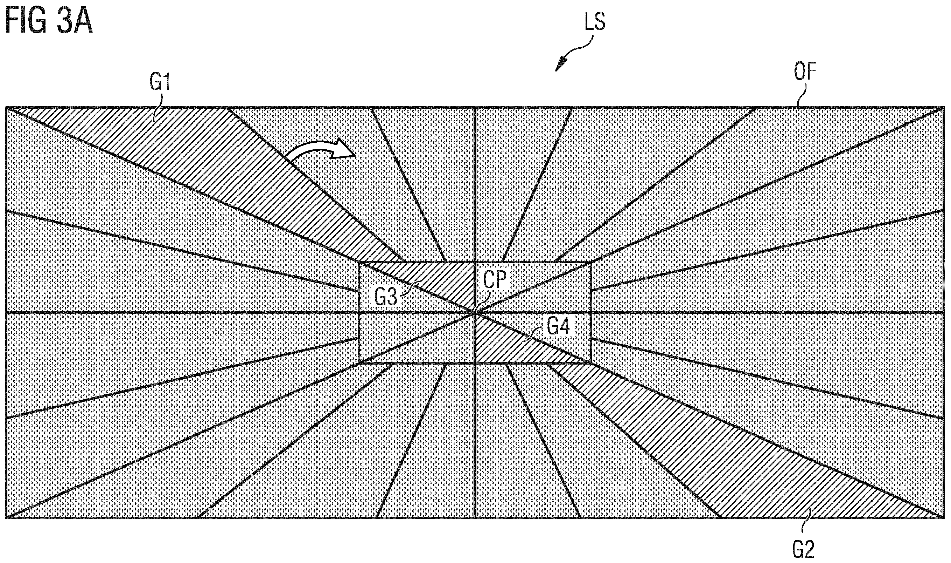

Figures 3A to 3C show examples of a scanning process. Addressing by means of the driver circuit DC can be changed during operation of the LiDAR sensor. The driver circuit DC addresses the groups of light emitters LE according to a scanning process. The scanning process defines a sequence or chronological order as to when and with which emission characteristic a given group of light emitters is to be addressed. For example, during the scanning process one or more groups of light emitters emit light constantly or for a pre-determined period of time. Other groups of light emitters may emit light sequentially one after the other.

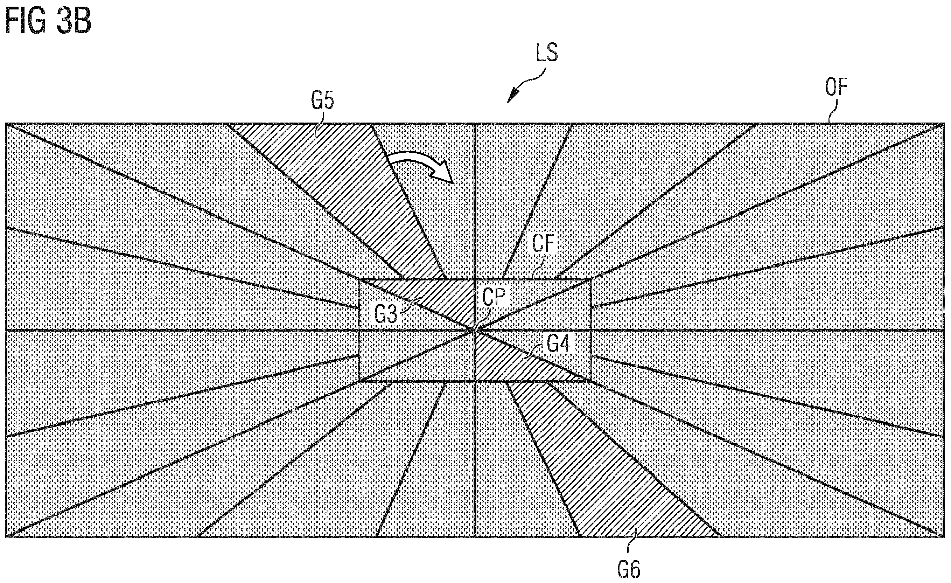

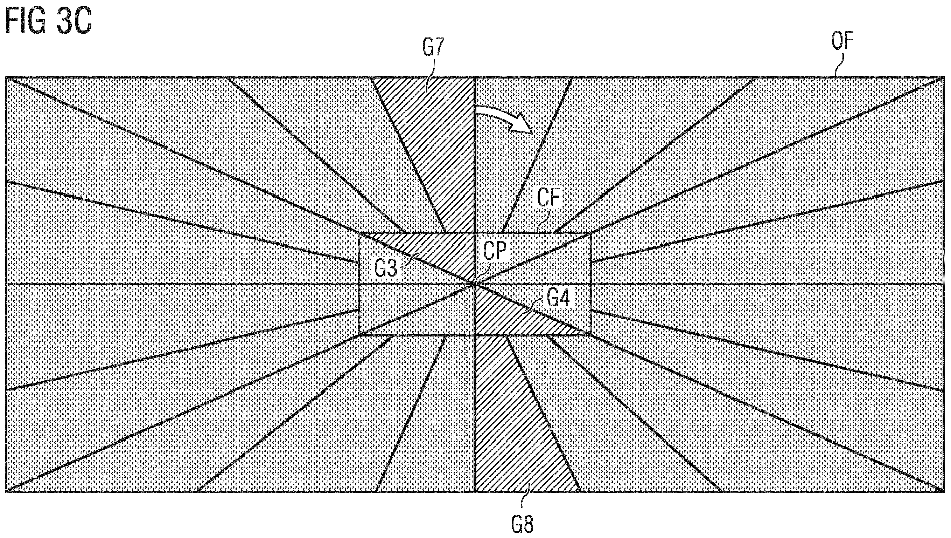

The drawings in Figures 3A, 3B and 3C show three consecutive steps from an example scanning process. This will be considered a "circular scanning pattern" hereinafter. The light source is sectioned as introduced in the embodiment of Figure 2B. In a first step (see Figure 3A) two groups G1 and G2 from the outer groups are activated, i.e. are addressed to emit with a certain intensity (according to the emission characteristic used). The groups G1 and G2 are located on opposite sides with respect to the center point CF. At the same time two groups G3 and G4 from the inner groups, i.e. with the center frame CF, are addressed to emit with a certain intensity (according to the emission characteristic used). The groups G3 and G4 are located on opposite sides with respect to the center point CP.

In a second step (see Figure 3B) the two groups G1 and G2 from the outer groups are deactivated. However, two further groups G5 and G6 from the outer groups are activated instead, i.e. are addressed to emit with a certain intensity (according to the emission characteristic used). The groups G1 and G2, however, remain activated as before. The further groups G5 and G6 are located on opposite sides with respect to the center point CF. In a third step (see Figure 3C) the two groups G5 and G6 from the outer groups are deactivated. However, two further groups G7 and G8 from the outer groups are activated instead, i.e. are addressed to emit with a certain intensity (according to the emission characteristic used). Again the groups G1 and G2, however, remain activated as before. The further groups G7 and G8 are located on opposite sides with respect to the center point CT.

With every further step a neighboring pair of further groups are activated and the pair which was activated in the previous step is deactivated. The repeated steps mimic a scanning which defines the scanning process introduced above. Until one revelation of the scanning process is completed the two groups G3 and G4 from the inner groups remain activated. In a next revelation the pair of inner groups G3, G4 may be deactivated and proceed to neighboring pair of inner groups. For example, for every N pairs of outer groups, i.e. one complete revelation, a pair of inner groups "fires", i.e. gets activated, N times, until in a next revelation, a neighboring pair of inner groups "fires" N time for every N pairs of outer groups, and so on.

This example scanning process can be adjusted to realize different scanning patterns. Thus, even though the groups are hardwired by design, flexibility is offered by means of the scanning process control via the driver circuit. The scanning process and chronological order effectively mimic a scanning of common LiDAR systems but without the need of mechanical components such as a MEMS mirror or steering device. Scanning is a time depend process with a high degree of flexibility. Different scanning patterns can be set by changing the chronological order. For example, a "circular" scanning pattern can be implemented by addressing groups of light emitters in a clockwise or counterclockwise fashion. A "forward facing" scanning pattern may favor regions of interests along a line in the LiDAR image, e.g. a horizontal line, and may be used for long range LiDAR. The processing unit can be arranged to receive customized scanning patterns of a user or be programmable to set the chronological order for a current scanning process. For example, scanning patterns could be optimizations for corner (medium range) / side facing (short range) LiDAR, specific configurable scenes in industrial and surveillance scenes, autonomous robots, or the like.

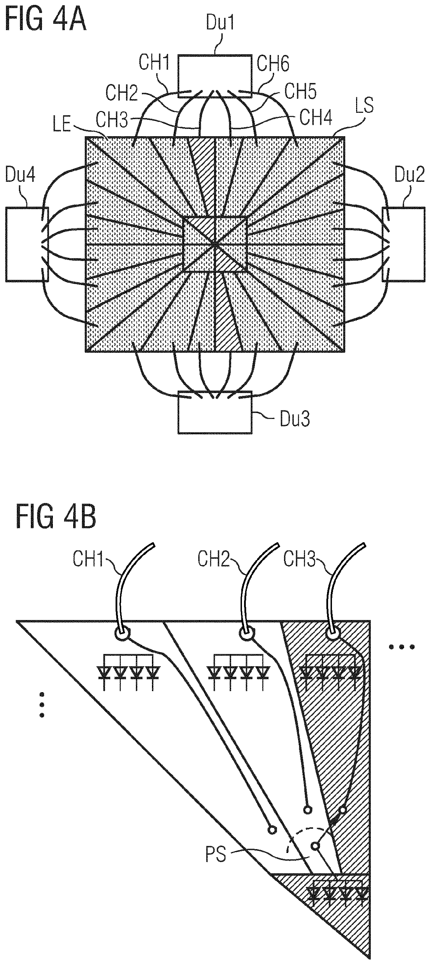

Figures 4A, 4B show examples of a driver circuit. The driver circuit comprises four driver units DU1, ..., DU4 which together form the driver circuit DC. Each driver unit comprises several driver channels CH1, ..., CH6 which are electrically connected to respective groups of light emitters. The driver channel establish hardwired circuit connection to the groups of light emitters. The connections can be implemented as dedicated power/control routing or via programmable switches PS as shown in Figure 4B which shows a magnified section of the light source including groups of light emitters. Thus, in this embodiment driver units can be placed all around the VCSEL - something that is not trivial with the tradition approaches. This makes the power routing and current density distribution a lot simpler than with the traditional approach that only allows placement of drivers on two of the four sides of the VCSEL.

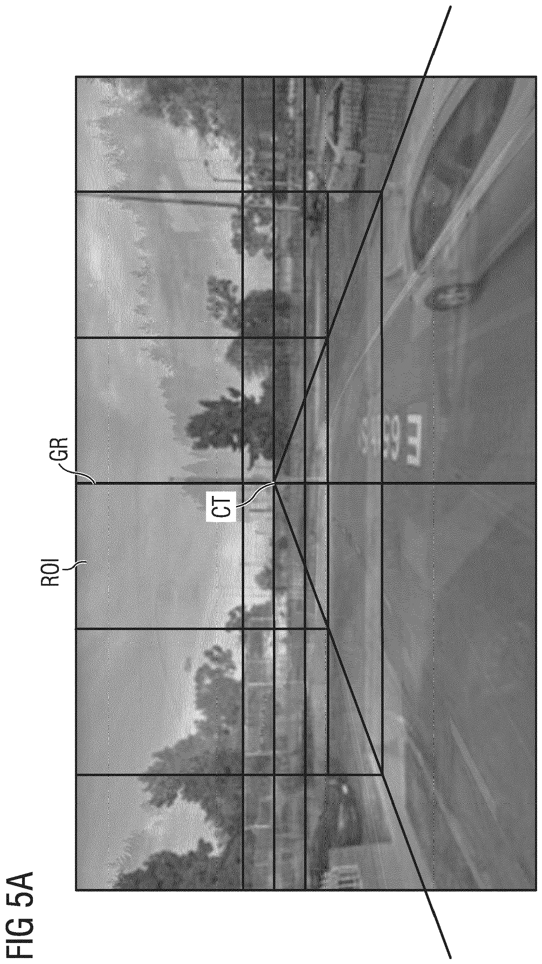

Figures 5A to 5C show examples of regions of interest in a LiDAR image. The LiDAR sensor may employ different scanning patterns. For example, the pixels of the detector form an image sensor. The processing unit is operable to provide a LiDAR image as output. In the LiDAR image regions of interest can be defined and, e.g. by way of the processing unit PU, can be assigned to the groups of light emitters.

The scanning process can be used to define which regions of interest receive illumination during the scanning. For example, the regions of interest grouped around the center of the field of view can be illuminated more than the edges of the FOV. In another example, regions of interest where farther away objects are localized may need different, e.g. more illumination, than regions of interest with closer objects.

Both the grouping of light emitters and regions of interest can be chosen in view of a-priori knowledge or assumptions on what the LiDAR sensor will be viewing. For example, this can be predicted to some extend for auto motive applications.

Figure 5A shows an overlap of images taken in various scenes for auto motive application. The overlap allows for identifying recurring distributions or activities in the image. One such recurring motive is a street which typically seems to converge towards the center point CP of the image. Another recurring motive may be a horizon which spans an area in the center of the image and along a horizontal axis of the image. The layout of the groups of light emitters can be chosen to mimic these findings. For example, the image shows triangular groups which are centered and converge towards center point CP of the image. These groups mimic the street, for example. This may define the electrical interconnections at the level of the light source, e.g. during manufacture of the LiDAR sensor.

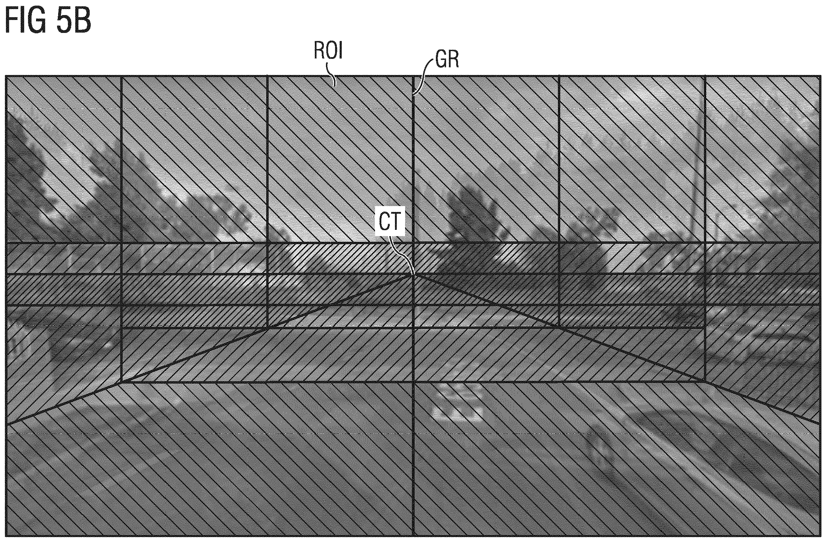

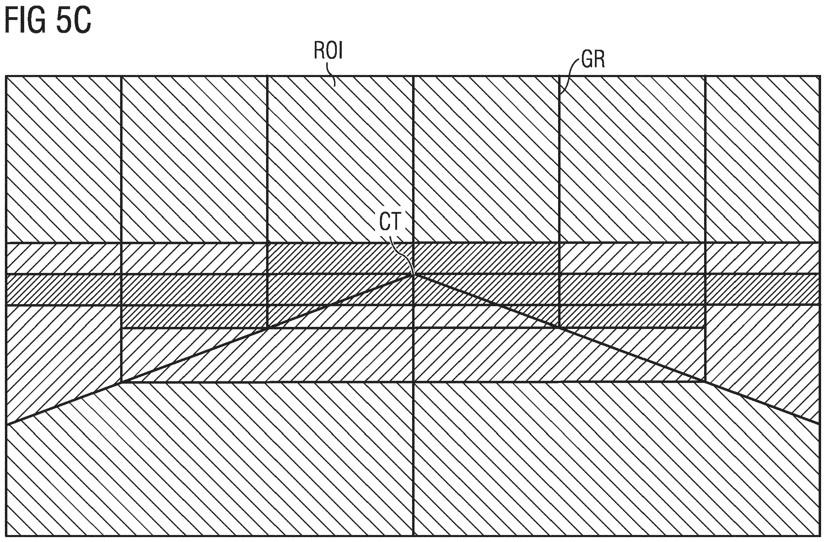

Figure 5B shows the same overlap of images taken in various scenes. However, relative intensities are indicated in certain regions of interest by greyscale. These regions can be identified by image analysis. In the image some regions with darker scale need more illumination and corresponding groups are addressed to emit more often, or are observed by the detector more times than the lighter scaled areas. This allows the receiver chain to apply more statistical processing to reduce noise and improve detectable range. Figure 5C shows the resulting scanning pattern resulting from the analysis.

The LiDAR sensor may be operable in a learning mode. During the learning mode a distribution and/or activity of distances is recorded and referenced to the regions of interest, e.g. by means of the processing unit. This way the scanning process can be adjusted during operation in order to account for the actual scene to be measured. The learning mode can be repeated during operation of LiDAR sensor.

The proposed concept steps away from the traditional row/column partitioning with equal illumination. Instead a free form partitioning scheme is implemented with illumination power optimized based on a-priori knowledge of the targeted types of scene in the field of view. The grouping of light emitters allow for a free form approach in segmentation, non-homogenous illumination scheme and, in case of the circular pattern, a circular firing scheme can be used instead of the traditional horizontal / vertical firing schemes. The approach is better in the sense that it allows for directing more of the available optical energy into an area that otherwise requires the entire emitter and sensor to become more powerful. As such, it provides are more power efficient solution than the traditional homogeneous illumination approaches.

### Reference numerals

- CA: carrier
- CF: center frame
- CH1 to CH6: driver channels
- CP: corner point
- CT: center
- DC: driver circuit
- DU1 to DU4: driver unit
- DT: detector
- GR: group of light emitters
- G1 to G8: groups of light emitters
- LB: light barrier
- LE: light emitter
- LS: light source
- OF: outer frame
- PD: photodetector
- PS: programmable switch
- PU: processing unit
- ROI: region of interest

## Claims

1. A LiDAR sensor for light detection and ranging, comprising:
- a light source (LS) comprising an array of light emitters (LE), wherein the light emitters (LE) are electrically interconnected as groups, and wherein the light emitters are operable to emit light away from the LiDAR sensor, wherein at least two of the groups of light emitters (LE) form areas of the light source (LS) resembling different geometries from each other,
- a driver circuit (DC) which is operable to address the groups of light emitters (LE) individually, such that the light emitters (LE) from a same group emit light with a same emission characteristic,
- a detector (DT) comprising an array of photodetectors (PD), wherein each photodetector (PD) is operable to detect light emitted by the light source (LS) and being reflected by an object outside the LiDAR sensor and to generate a detector signal as a function of the detected light, and
- a processing unit (PU), which is operable to provide an output indicative of distance to the object based on the detector signals associated with a respective group of light emitters (LE).

2. The LiDAR sensor according to claim 1, wherein the groups of the light emitters (LE) and/or groups of photodetectors, by way of their electrical interconnections, form contiguous areas of the array of light emitters (LE) or of the detector (DT) .

3. The LiDAR sensor according to claim 1 or 2, wherein the area formed by at least one group of light emitters and/or photodetectors resembles a non-rectangular geometry.

4. The LiDAR sensor according to one of claims 1 to 3, wherein:
- the processing unit (PU) is operable to provide a LiDAR image as output, and
- the groups of light emitters (LE) are arranged according to regions of interest of the LiDAR image.

5. The LiDAR sensor according to one of claims 1 to 4, wherein the addressing of light emitters (LE) as groups is established by means of at least one of a hardwired connection, a programmable switch and a dedicated power/control routing between a given group of light emitters (LE) and the driver circuit (DC).

6. The LiDAR sensor according to one of claims 1 to 5, wherein
- the driver circuit (DC) is operable to address the groups of light emitters (LE) according to a scanning process; and wherein during the scanning process:
- one or more groups of light emitters (LE) emit light constantly during the scanning process,
- one or more groups of light emitters (LE) emit light for a pre-determined period of time,
- one or more groups of light emitters (LE) emit light sequentially in a chronological order.

7. The LiDAR sensor according to claim 6, wherein the processing unit (PU) is operable to define the scanning process by setting the chronological order as to when and with which emission characteristic a given group of light emitters (LE) is to be addressed by means of the driver circuit (DC).

8. The LiDAR sensor according to one of claims 1 to 7, wherein the emission characteristic of a light emitter (LE) involves light intensity and/or light wavelength, according to one of the following:
- a given light emitter (LE) or group of light emitters (LE), according to the emission characteristic used, emits light of a particular intensity and/or a particular wavelength, and/or
- a given light emitter (LE) or group of light emitters (LE), according to the emission characteristic used, emits no light.

9. The LiDAR sensor according to one of claims 1 to 8, wherein the driver circuit comprises a plurality of driver channels (CH), wherein
- each driver channel (CH) is associated to a section of the light source (LS), and
- the driver channels (CH) are synchronized with respect to addressing the groups of light emitters (LE).

10. The LiDAR sensor according to one of claims 4 to 9, wherein
- the processing unit (PU) is operable to assign the regions of interest (ROI) in the LiDAR image to the groups of light emitters (LE), and
- the scanning process further defines a relative illumination of the regions of interest (ROI) during the scanning process.

11. The LiDAR sensor according to one of claims 1 to 10, wherein at least the detector (DT), the at least one driver circuit (DC) and the processing unit (PU) are integrated in a common integrated circuit (IC).

12. The LiDAR sensor according to one of claims 1 to 11, wherein
- the light source comprises an array of VCSEL lasers, and
- the detector comprises an array of single-photon avalanche diodes, SPADs.

13. A LiDAR module, comprising:
- at least one LiDAR sensor according to one of claims 1 to 12, and
- a package enclosing the LiDAR sensor with a light barrier (LB) optically shielding the light source (LS) from the detector (DT); such that:
- the light emitters (LE) are operable to emit light away from the LiDAR module, and
- the photodetectors are operable to detect emitted light reflected by an object outside the LiDAR module.

14. A LiDAR enabled device, comprising at least one LiDAR module according to claim 13 embedded in a host system, the host system comprising one of:
- an assistance system for distance control, such as drive control, flight control, traffic control,
- an advanced driver assistance system, ADAS,
- a surveillance system,
- an industrial system, such as a logistics system,
- a mobile device,
- a navigation system, and/or
- a camera.

15. A method of operating a LiDAR sensor for light detection and ranging, the LiDAR sensor comprising:
- a light source (LS) further comprising an array of light emitters (LE), wherein the light emitters (LE) are electrically interconnected as groups, and wherein the light emitters are operable to emit light away from the LiDAR sensor,
- a driver circuit (DC),
- a detector (DT) comprising an array of photodetectors (PD), and
- a processing unit; the method comprising the steps of:
- addressing, using the driver circuit (DC), the groups of light emitters (LE) individually, such that the light emitters (LE) from a same group emit light with a same emission characteristic,
- detecting, using the photodetectors (PD), light emitted by the light source (LS) and being reflected by an object outside the LiDAR sensor and generating detector signals as a function of the detected light, and
- providing, using the processing unit (PU), an output indicative of distance to the object based on the detector signals associated with a respective group of light emitters (LE).
